# EUROPEAN PATENT APPLICATION

(11) **EP 4 325 752 A1**
(43) Date of publication of application: **21.02.2024**
(21) Application number: 22787305.6
(22) Date of filing: 14.03.2022
(51) Int. Cl.: H04L 1/00

(54) **UCI CASCADING DETERMINATION METHOD AND APPARATUS, AND TERMINAL AND NETWORK-SIDE DEVICE**

(30) Priority: 16.04.2021 CN 202110412070
(71) Applicant: Datang Mobile Communications Equipment Co., Ltd., Beijing 100085 (CN)
(72) Inventor: SHEN, Shuling, Beijing 100085 (CN); GAO, Xuejuan, Beijing 100085 (CN); SI, Qianqian, Beijing 100085 (CN)
(74) Representative: Maiwald GmbH
(86) International application number: PCT/CN2022/080613
(87) International publication number: WO 2022/218075

(57) **Abstract**

The present disclosure provides a method and a device for determining cascading of UCI, a terminal and a network side device. The method includes: determining based on a first rule, by a terminal, a bit cascading order of multiple UCIs with different priorities that are to be jointly encoded on a first uplink channel, where the first rule includes: determining the bit cascading order of the multiple UCIs based on a priority order preferentially; or, determining the bit cascading order of the multiple UCIs based on UCI types preferentially, where a bit cascading order of multiple UCIs with a same UCI type is determined based on a priority order; and transmitting, by the terminal, on the first uplink channel, the multiple UCIs cascaded based on the bit cascading order.

## Description

### CROSS-REFERENCE TO RELATED APPLICATION

This application claims a priority to Chinese Patent Application No. 202110412070.8 filed in China on April 16, 2021, which is incorporated in its entirety by reference herein.

### TECHNICAL FIELD

The present disclosure relates to the technical field of communications, and in particular, to a method and a device for determining cascading of UCI, a terminal and a network side device.

### BACKGROUND

Uplink control information (Uplink Control Information, UCI) includes hybrid automatic repeat request-acknowledge (Hybrid Automatic Repeat reQuest-ACKnowledge, HARQ-ACK), scheduling request (Scheduling Request, SR), channel state information (Channel Situation Information, CSI), etc. Usually, the UCI is carried on a physical uplink control channel (Physical Uplink Control Channel, PUCCH) for transmission. When the PUCCH and a physical uplink shared channel (Physical Uplink Shared Channel, PUSCH) conflict in a time domain, the UCI may be carried on the PUSCH for transmission in some cases.

During the research process of ultra-reliable low latency communication (Ultra-Reliable Low Latency Communication, URLLC), different urgency levels of different types of service transmissions are considered, and two levels of priorities are defined, namely, a high priority (High Priority, HP) and a low priority (Low Priority, LP). Currently, in Rel-15/16 (Release 15/16) protocol, transmission on a same uplink channel is only supported by multiple UCI types with a same priority. In the related technologies, a bit cascading order corresponding to different UCI types with a same priority is as follows: when a PUCCH is multiplexed to transmit an HARQ-ACK and an SR, the bit cascading order of multiple UCIs is HARQ-ACK first and then SR; when a PUCCH is multiplexed to transmit an HARQ-ACK, an SR and CSI, the bit cascading order of the multiple UCIs is HARQ-ACK first, then SR and finally CSI; and if at least one CSI is divided into two CSI parts for transmission, CSI part1 is cascaded after the HARQ-ACK and the SR for joint encoding, and CSI part2 is independently encoded.

In the research process of Rel-17 URLLC, UCIs with different priorities have been allowed to be transmitted on a same multiplexed uplink channel, however, the specific encoding method is still under discussion. Joint encoding of all UCIs is one of the candidate solutions. When joint encoding is adopted, a cascading order of bits of the multiple UCIs with different priorities needs to be determined, and there is no specific technical solution yet.

### SUMMARY

Embodiments of the present disclosure are to provide a method and a device for determining cascading, a terminal and a network side device, to solve a problem in the related technologies that a cascading order of bits of multiple UCIs with different priorities cannot be determined.

To solve the above problem, embodiments of the present disclosure provide a method for determining cascading of uplink control information (UCI), including:
determining based on a first rule, by a terminal, a bit cascading order of multiple UCIs with different priorities that are to be jointly encoded on a first uplink channel; wherein the first rule includes:
determining the bit cascading order of the multiple UCIs based on a priority order preferentially;
   or,
determining the bit cascading order of the multiple UCIs based on UCI types preferentially, where a bit cascading order of multiple UCIs with a same UCI type is determined based on a priority order; and
transmitting, by the terminal, on the first uplink channel, the multiple UCIs cascaded based on the bit cascading order.

In a case that the first rule includes determining the bit cascading order of the multiple UCIs based on the priority order preferentially, the first rule further includes: a bit cascading order of multiple UCIs with a same priority is determined based on UCI types.

Priorities of the multiple UCIs include: a high priority and a low priority;
where determining the bit cascading order of the multiple UCIs based on the priority order includes:
determining the bit cascading order of the multiple UCIs based on the priority order as follows: bits of UCI with low priority are cascaded after bits of UCI with high priority, or, bits of UCI with high priority are cascaded after bits of UCI with low priority.

The method further includes:
determining based a second rule, by the terminal, a bit mapping order of the multiple UCIs; where the second rule includes:
mapping a more significant bit of UCI before mapping a less significant bit of the UCI;
   or,
mapping a less significant bit of UCI before mapping a more significant bit of the UCI.

The first uplink channel includes at least one of the following:
a physical uplink control channel (PUCCH); or,
a physical uplink shared channel (PUSCH).

Embodiments of the present disclosure further provide a method for determining cascading of uplink control information (UCI), including:
receiving on a first uplink channel, by a network side device, multiple UCIs with different priorities that are jointly encoded; and
determining based on a first rule, by the network side device, a bit cascading order of the multiple UCIs with different priorities; where the first rule includes:
   determining the bit cascading order of the multiple UCIs based on a priority order preferentially;
      or,
   determining the bit cascading order of the multiple UCIs based on UCI types preferentially, where a bit cascading order of multiple UCIs with a same UCI type is determined based on a priority order.

In a case that the first rule includes determining the bit cascading order of the multiple UCIs based on the priority order preferentially, the first rule further includes: a bit cascading order of multiple UCIs with a same priority is determined based on UCI types.

Priorities of the multiple UCIs include: a high priority and a low priority;
where determining the bit cascading order of the multiple UCIs based on the priority order includes:
determining the bit cascading order of the multiple UCIs based on the priority order as follows: bits of UCI with low priority are cascaded after bits of UCI with high priority, or, bits of UCI with high priority are cascaded after bits of UCI with low priority.

The method further includes:
determining based a second rule, by the network side device, a bit mapping order of the multiple UCIs; where the second rule includes:
mapping a more significant bit of UCI before mapping a less significant bit of the UCI;
   or,
mapping a less significant bit of UCI before mapping a more significant bit of the UCI.

The first uplink channel includes at least one of the following:
a physical uplink control channel (PUCCH); or,
a physical uplink shared channel (PUSCH).

Embodiments of the present disclosure also provide a terminal, including a memory, a transceiver, and a processor;
where the memory is configured to store a computer program, the transceiver is configured to transmit and receive data under control of the processor, and the processor is configured to read the computer program in the memory and perform following operations:
determining, based on a first rule, a bit cascading order of multiple uplink control information (UCIs) with different priorities that are to be jointly encoded on a first uplink channel; where the first rule includes:
determining the bit cascading order of the multiple UCIs based on a priority order preferentially;
   or,
determining the bit cascading order of the multiple UCIs based on UCI types preferentially, where a bit cascading order of multiple UCIs with a same UCI type is determined based on a priority order; and
transmitting, on the first uplink channel, the multiple UCIs cascaded based on the bit cascading order.

In a case that the first rule includes determining the bit cascading order of the multiple UCIs based on the priority order preferentially, the first rule further includes: a bit cascading order of multiple UCIs with a same priority is determined based on UCI types.

Priorities of the multiple UCIs include: a high priority and a low priority;
where determining the bit cascading order of the multiple UCIs based on the priority order includes:
determining the bit cascading order of the multiple UCIs based on the priority order as follows: bits of UCI with low priority are cascaded after bits of UCI with high priority, or, bits of UCI with high priority are cascaded after bits of UCI with low priority.

The processor is further configured to read the computer program in the memory and perform following operation:
determining, based a second rule, a bit mapping order of the multiple UCIs; where the second rule includes:
mapping a more significant bit of UCI before mapping a less significant bit of the UCI;
   or,
mapping a less significant bit of UCI before mapping a more significant bit of the UCI.

The first uplink channel includes at least one of the following:
a physical uplink control channel (PUCCH); or,
a physical uplink shared channel (PUSCH).

Embodiments of the present disclosure also provide a device for determining cascading of uplink control information (UCI), applied to a terminal, including:
a first determining unit, configured to determine, based on a first rule, a bit cascading order of multiple UCIs with different priorities that are to be jointly encoded on a first uplink channel; where the first rule includes:
determining the bit cascading order of the multiple UCIs based on a priority order preferentially;
   or,
determining the bit cascading order of the multiple UCIs based on UCI types preferentially, where a bit cascading order of multiple UCIs with a same UCI type is determined based on a priority order; and
a transmitting unit, configured to transmit, on the first uplink channel, the multiple UCIs cascaded based on the bit cascading order.

In a case that the first rule includes determining the bit cascading order of the multiple UCIs based on the priority order preferentially, the first rule further includes: a bit cascading order of multiple UCIs with a same priority is determined based on UCI types.

Priorities of the multiple UCIs include: a high priority and a low priority;
where determining the bit cascading order of the multiple UCIs based on the priority order includes:
determining the bit cascading order of the multiple UCIs based on the priority order as follows: bits of UCI with low priority are cascaded after bits of UCI with high priority, or, bits of UCI with high priority are cascaded after bits of UCI with low priority.

The device further includes:
a third determining unit, configured to determine, based a second rule, a bit mapping order of the multiple UCIs; where the second rule includes:
mapping a more significant bit of UCI before mapping a less significant bit of the UCI;
   or,
mapping a less significant bit of UCI before mapping a more significant bit of the UCI.

The first uplink channel includes at least one of the following:
a physical uplink control channel (PUCCH); or,
a physical uplink shared channel (PUSCH).

Embodiments of the present disclosure also provide a network side device, including a memory, a transceiver, and a processor;
where the memory is configured to store a computer program, the transceiver is configured to transmit and receive data under control of the processor, and the processor is configured to read the computer program in the memory and perform following operations:
receiving, on a first uplink channel, multiple uplink control information (UCIs) with different priorities that are jointly encoded; and
determining, based on a first rule, a bit cascading order of the multiple UCIs with different priorities; where the first rule includes:
   determining the bit cascading order of the multiple UCIs based on a priority order preferentially;
      or,
   determining the bit cascading order of the multiple UCIs based on UCI types preferentially, where a bit cascading order of multiple UCIs with a same UCI type is determined based on a priority order.

In a case that the first rule includes determining the bit cascading order of the multiple UCIs based on the priority order preferentially, the first rule further includes: a bit cascading order of multiple UCIs with a same priority is determined based on UCI types.

Priorities of the multiple UCIs include: a high priority and a low priority;
where determining the bit cascading order of the multiple UCIs based on the priority order includes:
determining the bit cascading order of the multiple UCIs based on the priority order as follows: bits of UCI with low priority are cascaded after bits of UCI with high priority, or, bits of UCI with high priority are cascaded after bits of UCI with low priority.

The processor is further configured to read the computer program in the memory and perform following operation:
determining, based a second rule, a bit mapping order of the multiple UCIs; where the second rule includes:
mapping a more significant bit of UCI before mapping a less significant bit of the UCI;
   or,
mapping a less significant bit of UCI before mapping a more significant bit of the UCI.

The first uplink channel includes at least one of the following:
a physical uplink control channel (PUCCH); or,
a physical uplink shared channel (PUSCH).

Embodiments of the present disclosure also provide a device for determining cascading of uplink control information (UCI), applied to a network side device, including:
a receiving unit, configured to receive, on a first uplink channel, multiple UCIs with different priorities that are jointly encoded; and
a second determining unit, configured to determine, based on a first rule, a bit cascading order of the multiple UCIs with different priorities; where the first rule includes:
   determining the bit cascading order of the multiple UCIs based on a priority order preferentially;
      or,
   determining the bit cascading order of the multiple UCIs based on UCI types preferentially, where a bit cascading order of multiple UCIs with a same UCI type is determined based on a priority order.

In a case that the first rule includes determining the bit cascading order of the multiple UCIs based on the priority order preferentially, the first rule further includes: a bit cascading order of multiple UCIs with a same priority is determined based on UCI types.

Priorities of the multiple UCIs include: a high priority and a low priority;
where determining the bit cascading order of the multiple UCIs based on the priority order includes:
determining the bit cascading order of the multiple UCIs based on the priority order as follows: bits of UCI with low priority are cascaded after bits of UCI with high priority, or, bits of UCI with high priority are cascaded after bits of UCI with low priority.

The device further includes:
a fourth determining unit, configured to determine, based a second rule, a bit mapping order of the multiple UCIs; where the second rule includes:
mapping a more significant bit of UCI before mapping a less significant bit of the UCI;
   or,
mapping a less significant bit of UCI before mapping a more significant bit of the UCI.

The first uplink channel includes at least one of the following:
a physical uplink control channel (PUCCH); or,
a physical uplink shared channel (PUSCH).

Embodiments of the present disclosure also provide a processor readable storage medium, where the processor readable storage medium stores a computer program, and the computer program is used to cause a processor to perform the method described above.

The above technical solutions of the present disclosure at least have the following beneficial effects.

In the method and the device for determining cascading of UCI, the terminal and the network side device according to the embodiments of the present disclosure, in a case that the terminal transmits the multiple UCIs with different priorities on the first uplink channel through joint encoding, the terminal determines the bit cascading order of the multiple UCIs based on the priority order preferentially, or, the terminal determines the bit cascading order of the multiple UCIs based on the UCI types preferentially and a bit cascading order of multiple UCIs with a same UCI type is determined based on a priority order. In this way, it is ensured that the uplink channel is multiplexed to transmit the multiple UCIs with different priorities.

### BRIEF DESCRIPTION OF THE DRAWINGS

To better clarify technical solutions of embodiments of the present disclosure, drawings used in descriptions of the embodiments are briefly introduced hereinafter. Apparently, the described drawings merely illustrate some embodiments of the present disclosure. A person ordinary skilled in the art can obtain other drawings based on these drawings without any creative efforts.
FIG. 1 is a block diagram of a radio communication system to which embodiments of the present disclosure may be applied;
FIG. 2 is a first schematic diagram of steps of a method for determining cascading according to embodiments of the present disclosure;
FIG. 3 is a second schematic diagram of steps of a method for determining cascading according to embodiments of the present disclosure;
FIG. 4 is a schematic structural diagram of a terminal according to embodiments of the present disclosure;
FIG. 5 is a first schematic structural diagram of a device for determining cascading according to embodiments of the present disclosure;
FIG. 6 is a schematic structural diagram of a network side device according to embodiments of the present disclosure; and
FIG. 7 is a second schematic structural diagram of a device for determining cascading according to embodiments of the present disclosure.

### DETAILED DESCRIPTION

In order to make technical issues to be addressed, technical solutions, and advantages of the present disclosure clearer, detailed descriptions are provided in conjunction with drawings and embodiments of the present disclosure.

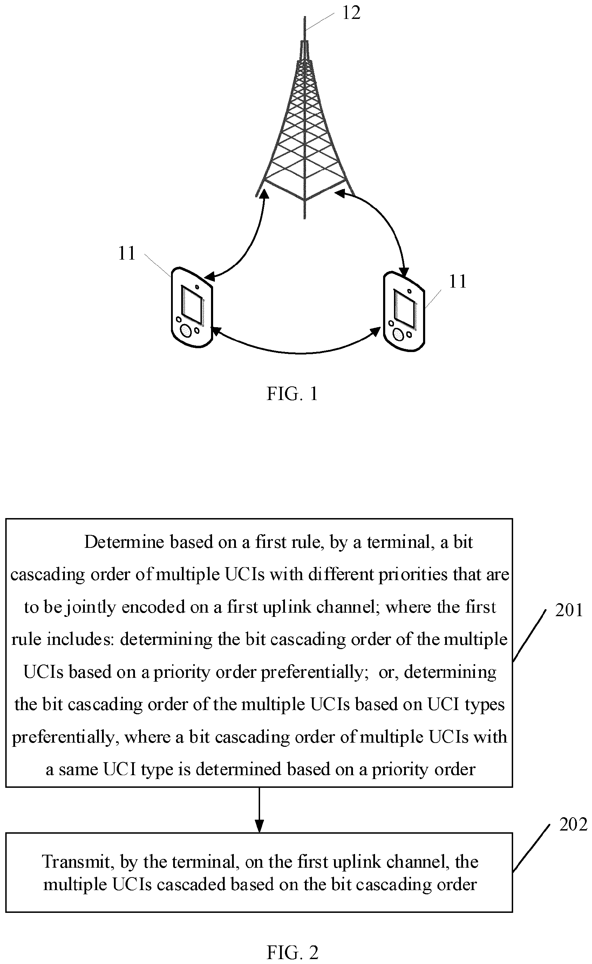

FIG. 1 illustrates a block diagram of a radio communication system to which embodiments of the present disclosure may be applied. The radio communication system includes a terminal 11 and a network side device 12. The terminal 11 may also be referred to as a terminal device or a user equipment (User Equipment, UE). It should be noted that in the embodiments of the present disclosure, the specific type of the terminal 11 is not limited. The network side device 12 may be a base station or a core network, and it should be noted that in the embodiments of the present disclosure, the base station in the NR system is only taken as an example, and the specific type of the base station is not limited.

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it.

The term "multiple" in the embodiments of the present disclosure refers to two or more than two, and other words for expressing quantities are similar to it.

The technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

The technical solutions in the embodiments of the present disclosure may be applied to various systems, especially 5G systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, a LTE frequency division duplex (frequency division duplex, FDD) system, a LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5GS), etc.

The terminal involved in the embodiments of the present disclosure may refers to a device that provides voice and/or data connectivity to a user, a handheld device with a wireless connection function, or other processing devices connected to a wireless modem. In different systems, the name of the terminal device may be different. For example, in 5G systems, the terminal device may be referred to as a user equipment (User Equipment, UE). A wireless terminal device may communicate with one or more core networks (Core Network, CN) through a radio access network (Radio Access Network, RAN). The wireless terminal device may be a mobile terminal device, such as a mobile phone (or referred to as a "cellular" phone) or a computer with a mobile terminal device, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. The wireless terminal device may also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device),which is not limited in the embodiments of the present disclosure.

The network device involved in the embodiments of the present disclosure may be a base station, and the base station may have multiple cells providing services for terminals. According to different application scenarios, the base station may also be referred to as an access point, or may be a device in an access network that communicates with wireless terminal devices through one or more sectors on air interfaces, or may have other names. The network device may be configured to exchange received air frames and Internet protocol (Internet Protocol, IP) packets, serving as a router between the wireless terminal devices and rest of the access network, where the rest of the access network may include an Internet Protocol (IP) communication network. The network device may also coordinate attribute management of air interfaces. For example, the network device involved in the embodiments of the present disclosure may be a network device (Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB), a relay node (relay node), a femto (femto), a pico (pico), etc., which is not limited in the embodiments of the present disclosure. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2D-MIMO, 3D-MIMO, FD-MIMO, or Massive MIMO, or may be diversity transmission, or precoding transmission, or beamforming transmission, etc.

As shown in FIG. 2, embodiments of the present disclosure provide a method for determining cascading of uplink control information (UCI), and the method includes following steps.

Step 201, determining based on a first rule, by a terminal, a bit cascading order of multiple UCIs with different priorities that are to be jointly encoded on a first uplink channel. The first rule includes:
determining the bit cascading order of the multiple UCIs based on a priority order preferentially;
   or,
determining the bit cascading order of the multiple UCIs based on UCI types preferentially, where a bit cascading order of multiple UCIs with a same UCI type is determined based on a priority order.

Step 202, transmitting, by the terminal, on the first uplink channel, the multiple UCIs cascaded based on the bit cascading order.

In embodiments of the present disclosure, the UCI types include an HARQ-ACK, an SR, and CSI. It should be noted that the multiple UCIs that are to be jointly encoded on the first uplink channel at least include the HARQ-ACK.

The first uplink channel includes at least one of the following:
a physical uplink control channel (PUCCH); or,
a physical uplink shared channel (PUSCH).

In at least one embodiment of the present disclosure, in a case that the first rule includes determining the bit cascading order of the multiple UCIs based on the priority order preferentially, the first rule further includes: a bit cascading order of multiple UCIs with a same priority is determined based on UCI types.

The priorities of the multiple UCIs include: a high priority (which may also be referred to as a first priority) and a low priority (which may also be referred to as a second priority);
determining the bit cascading order of the multiple UCIs based on the priority order includes:
determining the bit cascading order of the multiple UCIs based on the priority order as follows: bits of UCI with low priority are cascaded after bits of UCI with high priority, or, bits of UCI with high priority are cascaded after bits of UCI with low priority.

In at least one embodiment of the present disclosure, determining the bit cascading order of the multiple UCIs based on the UCI types includes: determining the bit cascading order of the multiple UCIs according to an existing cascading order of UCI types. For example, in a case that a PUCCH is multiplexed to transmit an HARQ-ACK and an SR, the bit cascading order of the multiple UCIs is HARQ-ACK first and then SR. In a case that a PUCCH is multiplexed to transmit an HARQ-ACK, an SR, and CSI, the bit cascading order of the multiple UCIs is HARQ-ACK first, then SR and finally CSI, and if at least one CSI is divided into two CSI parts for transmission, CSI part1 is cascaded after the HARQ-ACK and the SR for joint encoding and CSI part2 is independently encoded.

Further, in at least one embodiment of the present disclosure, the method further includes:
determining based a second rule, by the terminal, a bit mapping order of the multiple UCIs; where the second rule includes:
mapping a more significant bit of UCI before mapping a less significant bit of the UCI, which may also be referred to as that a manner of mapping a more significant bit before mapping a less significant bit is adopted for the UCI;
   or,
mapping a less significant bit of UCI before mapping a more significant bit of the UCI, which may also be referred to as that a manner of mapping a less significant bit before mapping a more significant bit is adopted for the UCI.

In summary, in a case that the terminal transmits the multiple UCIs with different priorities on the first uplink channel through joint encoding, the terminal determines the bit cascading order of the multiple UCIs based on the priority order preferentially, or, the terminal determines the bit cascading order of the multiple UCIs based on the UCI types preferentially and a bit cascading order of multiple UCIs with a same UCI type is determined based on a priority order. In this way, it is ensured that the uplink channel is multiplexed to transmit the multiple UCIs with different priorities.

In order to more clearly describe the method for determining cascading according to embodiments of the present disclosure, description is provided in conjunction with several examples.

In a first example, the bit cascading order of the multiple UCIs is determined based on the priority order preferentially.

A PUCCH is multiplexed by the terminal to transmit an HARQ-ACK, an SR and CSI, each of which has two priorities. First, the terminal performs sorting in order of priority. In this example, the terminal may cascade bits of UCI with a low priority after bits of UCI with a high priority. For multiple UCIs with a same priority, the HARQ-ACK, the SR, and the CSI are cascaded sequentially according to the UCI types. In this case, the finalized bit cascading order of the UCIs is HP HARQ-ACK, HP SR, HP CSI, LP HARQ-ACK, LP SR, and LP CSI. If bits of UCI with a high priority are cascaded after bits of UCI with a low priority, the finalized bit cascading order of the UCIs is LP HARQ-ACK, LP SR, LP CSI, HP HARQ-ACK, HP SR, and HP CSI.

Alternatively, if a PUCCH is multiplexed by the terminal to transmit an HARQ-ACK and an SR, each of which has two priorities, the bit cascading order is HP HARQ-ACK, HP SR, LP HARQ-ACK, and LP SR, or, LP HARQ-ACK, LP SR, HP HARQ-ACK, and HP SR.

Alternatively, if a PUCCH is multiplexed by the terminal to transmit an HARQ-ACK with two priorities, the bit cascading order is HP HARQ-ACK and LP HARQ-ACK, or, LP HARQ-ACK and HP HARQ-ACK.

In this example, the first case is taken as an example. A manner of mapping a more significant bit before mapping a less significant bit may be adopted for the UCI, i.e., bit sequences of multiple UCIs with different priorities are combined through cascading sequentially from left to right. It is assumed that each HARQ-ACK has 3 bits, each SR has 1 bit, and each CSI has 5 bits in this example, then the UCI bit sequence after cascading is *a*₀*, a*₁, *a*₂, ......, *a*₁₇. *a*₀*, a*₁, *a*₂ is mapped from the bit sequence of HP HARQ-ACK, *a*₃ is mapped from the bit sequence of HP SR, *a*₄, ...... , *a*₈ is mapped from the bit sequence of HP CSI, *a*₉, *a*₁₀, *a*₁₁ is mapped from the bit sequence of LP HARQ-ACK, *a*₁₂ is mapped from the bit sequence of LP SR, and *a*₁₃, ......, *a*₁₇ is mapped from the bit sequence of LP CSI. Conversely, if a manner of mapping a less significant bit before mapping a more significant bit is adopted for the UCI, i.e., bit sequences of multiple UCIs with different priorities are combined through cascading sequentially from right to left, then *a*₂, *a*₁, *a₀* is mapped from the bit sequence of HP HARQ-ACK, *a*₃ is mapped from the bit sequence of HP SR, *a₈, ..*...., *a₄* is mapped from the bit sequence of HP CSI, *a*₁₁, *a*₁₀, *a*₉ is mapped from the bit sequence of LP HARQ-ACK, *a*₁₂ is mapped from the bit sequence of LP SR, and *a*₁₇, ......, *a*₁₃ is mapped from the bit sequence of LP CSI. Same principle applies to other UCI bit cascading and mapping orders in the embodiments, which are not enumerated herein.

In a second example, the bit cascading order of the multiple UCIs is determined based on UCI types preferentially.

A PUCCH is multiplexed by the terminal to transmit an HARQ-ACK, an SR and CSI, each of which has two priorities. The terminal performs sorting in order of UCI type first, and the terminal performs sorting in order of priority for a same UCI type. In this example, if the terminal cascades bits of UCI with a low priority after bits of UCI with a high priority, then the finalized bit cascading order of the UCIs is HP HARQ-ACK, LP HARQ-ACK, HP SR, LP SR, HP CSI, and LP CSI. If the terminal cascades bits of UCI with a high priority after bits of UCI with a low priority, the finalized bit cascading order of the UCIs is LP HARQ-ACK, HP HARQ-ACK, LP SR, HP SR, LP CSI, and HP CSI.

Alternatively, if a PUCCH is multiplexed by the terminal to transmit an HARQ-ACK and an SR, each of which has two priorities, the bit cascading order is HP HARQ-ACK, LP HARQ-ACK, HP SR, and LP SR, or, LP HARQ-ACK, HP HARQ-ACK, LP SR, and HP SR.

Alternatively, if a PUCCH is multiplexed by the terminal to transmit an HARQ-ACK with two priorities, the bit cascading order is HP HARQ-ACK and LP HARQ-ACK, or, LP HARQ-ACK and HP HARQ-ACK.

In this example, the first case is taken as an example. A manner of mapping a more significant bit before mapping a less significant bit may be adopted for the UCI, i.e., bit sequences of multiple UCIs with different priorities are combined through cascading sequentially from left to right. It is assumed that each HARQ-ACK has 3 bits, each SR has 1 bit, and each CSI has 5 bits in this example, then the UCI bit sequence after cascading is *a*₀*, a*₁, *a*₂, ... ... , *a*₁₇. *a*₀*, a*₁, *a₂* is mapped from the bit sequence of HP HARQ-ACK, *a₃, a*₄, *a*₅ is mapped from the bit sequence of LP HARQ-ACK, *a*₆ is mapped from the bit sequence of HP SR, *a*₇ is mapped from the bit sequence of LP SR, *a*₈, ... ... , *a*₁₂ is mapped from the bit sequence of HP CSI, and *a*₁₃, ...... , *a*₁₇ is mapped from the bit sequence of LP CSI. Conversely, if a manner of mapping a less significant bit before mapping a more significant bit is adopted for the UCI, i.e., bit sequences of multiple UCIs with different priorities are combined through cascading sequentially from right to left, then *a*₂, *a*₁, *a*₀ is mapped from the bit sequence of HP HARQ-ACK, *a*₅*, a*₄, *a*₃ is mapped from the bit sequence of LP HARQ-ACK, *a*₆ is mapped from the bit sequence of HP SR, *a*₇ is mapped from the bit sequence of LP SR, *a*₁₂, ... ... , *a*₈ is mapped from the bit sequence of HP CSI, and *a*₁₇, ... ... , *a*₁₃ is mapped from the bit sequence LP CSI. Same principle applies to other UCI bit cascading and mapping orders in the embodiments, which are not enumerated herein.

### Third example

A PUSCH is multiplexed by the terminal to transmit one or more types of UCI, each of which has two priorities. The UCI at least include the HARQ-ACK. The manner for determining the UCI bit cascading order and mapping order is the same as that in the first example and the second example.

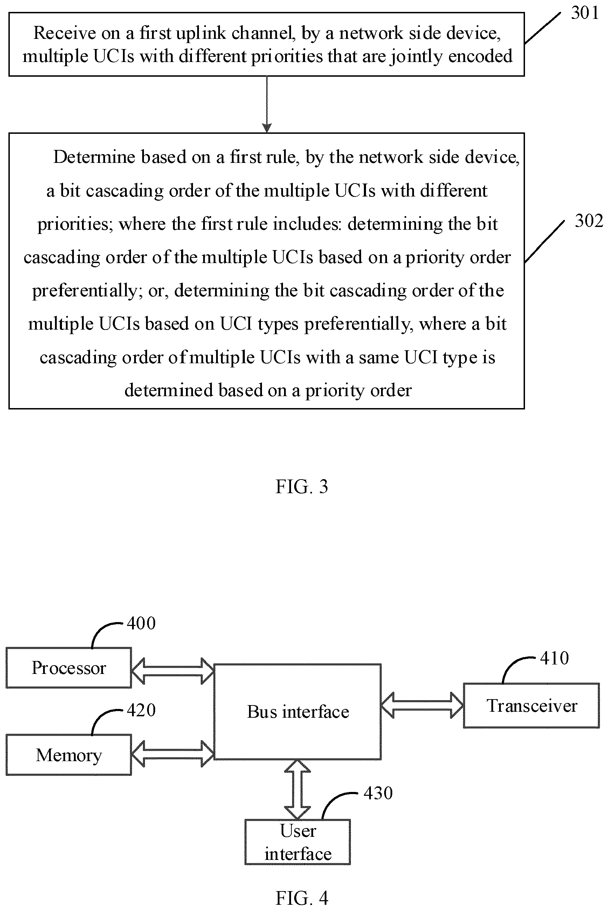

As shown in FIG. 3, embodiments of the present disclosure further provide a method for determining cascading of uplink control information (UCI), and the method includes following steps.

Step 301, receiving on a first uplink channel, by a network side device, multiple UCIs with different priorities that are jointly encoded.

Step 302, determining based on a first rule, by the network side device, a bit cascading order of the multiple UCIs with different priorities; where the first rule includes:
determining the bit cascading order of the multiple UCIs based on a priority order preferentially; or,
   or,
determining the bit cascading order of the multiple UCIs based on UCI types preferentially, where a bit cascading order of multiple UCIs with a same UCI type is determined based on a priority order.

In embodiments of the present disclosure, the UCI types include an HARQ-ACK, an SR, and CSI. It should be noted that the multiple UCIs that are to be jointly encoded on the first uplink channel at least include the HARQ-ACK.

In a case that the network side device receives on the first uplink channel the multiple UCIs with different priorities that are jointly encoded, the bit cascading order of the multiple UCIs is determined based on the first rule.

The first uplink channel includes at least one of the following:
a physical uplink control channel (PUCCH); or
a physical uplink shared channel (PUSCH).

In at least one embodiment of the present disclosure, in a case that the first rule includes determining the bit cascading order of the multiple UCIs based on the priority order preferentially, the first rule further includes: a bit cascading order of multiple UCIs with a same priority is determined based on UCI types.

The priorities of the multiple UCIs include: a high priority (which may also be referred to as a first priority) and a low priority (which may also be referred to as a second priority);
determining the bit cascading order of the multiple UCIs based on the priority order includes:
determining the bit cascading order of the multiple UCIs based on the priority order as follows: bits of UCI with low priority are cascaded after bits of UCI with high priority, or, bits of UCI with high priority are cascaded after bits of UCI with low priority.

In at least one embodiment of the present disclosure, determining the bit cascading order of the multiple UCIs based on the UCI types includes: determining the bit cascading order of the multiple UCIs according to an existing cascading order of UCI types. For example, in a case that a PUCCH is multiplexed to transmit an HARQ-ACK and an SR, the bit cascading order of the multiple UCIs is HARQ-ACK first and then SR. In a case that a PUCCH is multiplexed to transmit an HARQ-ACK, an SR, and CSI, the bit cascading order of the multiple UCIs is HARQ-ACK first, then SR and finally CSI, and if at least one CSI is divided into two CSI parts for transmission, CSI part1 is cascaded after the HARQ-ACK and the SR for joint encoding and CSI part2 is independently encoded.

Further, in at least one embodiment of the present disclosure, the method further includes:
determining based a second rule, by the network side device, a bit mapping order of the multiple UCIs; where the second rule includes:
mapping a more significant bit of UCI before mapping a less significant bit of the UCI, which may also be referred to as that a manner of mapping a more significant bit before mapping a less significant bit is adopted for the UCI;
   or,
mapping a less significant bit of UCI before mapping a more significant bit of the UCI, which may also be referred to as that a manner of mapping a less significant bit before mapping a more significant bit is adopted for the UCI.

In summary, in a case that the network side device receives on the first uplink channel the multiple UCIs with different priorities that are jointly encoded, the network side device determines the bit cascading order of the multiple UCIs based on the priority order preferentially, or, the network side device determines the bit cascading order of the multiple UCIs based on the UCI types preferentially and a bit cascading order of multiple UCIs with a same UCI type is determined based on a priority order. In this way, it is ensured that the uplink channel is multiplexed to transmit the multiple UCIs with different priorities.

As shown in FIG. 4, embodiments of the present disclosure also provide a terminal, including a memory 420, a transceiver 410, and a processor 400;
where the memory 420 is configured to store a computer program, the transceiver 410 is configured to transmit and receive data under control of the processor, and the processor 400 is configured to read the computer program in the memory and perform following operations:
determining, based on a first rule, a bit cascading order of multiple uplink control information (UCIs) with different priorities that are to be jointly encoded on a first uplink channel; where the first rule includes:
determining the bit cascading order of the multiple UCIs based on a priority order preferentially;
   or,
determining the bit cascading order of the multiple UCIs based on UCI types preferentially, where a bit cascading order of multiple UCIs with a same UCI type is determined based on a priority order; and
transmitting, on the first uplink channel, the multiple UCIs cascaded based on the bit cascading order.

As an optional embodiment, in a case that the first rule includes determining the bit cascading order of the multiple UCIs based on the priority order preferentially, the first rule further includes: a bit cascading order of multiple UCIs with a same priority is determined based on UCI types.

As an optional embodiment, priorities of the multiple UCIs include: a high priority and a low priority;
where determining the bit cascading order of the multiple UCIs based on the priority order includes:
determining the bit cascading order of the multiple UCIs based on the priority order as follows: bits of UCI with low priority are cascaded after bits of UCI with high priority, or, bits of UCI with high priority are cascaded after bits of UCI with low priority.

As an optional embodiment, the processor 400 is further configured to read the computer program in the memory and perform following operation:
determining, based a second rule, a bit mapping order of the multiple UCIs; where the second rule includes:
mapping a more significant bit of UCI before mapping a less significant bit of the UCI;
   or,
mapping a less significant bit of UCI before mapping a more significant bit of the UCI.

As an optional embodiment, the first uplink channel includes at least one of the following:
a physical uplink control channel (PUCCH); or,
a physical uplink shared channel (PUSCH).

In FIG. 4, a bus architecture may include any quantity of interconnected buses and bridges. Various circuits including one or more processors represented by the processor 400 and a memory represented by the memory 420 are linked. The bus architecture may further link various other circuits together, such as a periphery component, a voltage stabilizer and a power management circuit, which are known in the art and are not further described herein. A bus interface provides an interface. The transceiver 410 may be multiple elements, i.e., including a transmitter and a receiver, providing a unit for communicating with various other devices on transmission media. The transmission media include a wireless channel, a wired channel, an optical cable, or other transmission media. For different user equipment, the user interface 430 may be an interface capable of connecting externally and internally with the required equipment. The connected equipment includes but not limited to a keypad, a display, a speaker, a microphone, a joystick, etc.

The processor 400 is in charge of managing the bus architecture and common processes. The memory 420 may store data used by the processor 400 in performing operations.

Optionally, the processor 400 may be a central processing device (CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor may adopt a multi-core architecture.

The processor is configured to execute any of the methods in the embodiments of the present application according to obtained executable instructions by calling the computer program stored in the memory. The processor and the memory may be physically arranged separately.

In a case that the terminal according to the embodiments of the present disclosure transmits the multiple UCIs with different priorities on the first uplink channel through joint encoding, the terminal determines the bit cascading order of the multiple UCIs based on the priority order preferentially, or, the terminal determines the bit cascading order of the multiple UCIs based on the UCI types preferentially and a bit cascading order of multiple UCIs with a same UCI type is determined based on a priority order. In this way, it is ensured that the uplink channel is multiplexed to transmit the multiple UCIs with different priorities.

It should be noted that, the principles of solving problem used for the terminal and for the method for determining cascading according to the embodiments of the present disclosure are similar, hence, for implementations of the terminal, reference can be made to the implementations of the method, the repetition of which is not provided again herein.

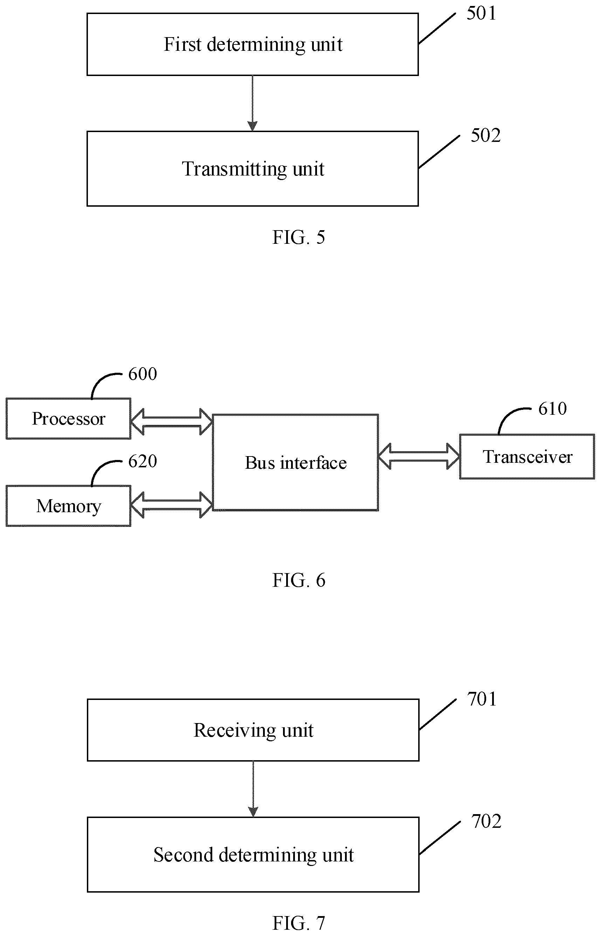

As shown in FIG. 5, embodiments of the present disclosure further provide a device for determining cascading of uplink control information (UCI), applied to a terminal, including:
a first determining unit 501, configured to determine, based on a first rule, a bit cascading order of multiple UCIs with different priorities that are to be jointly encoded on a first uplink channel; where the first rule includes:
determining the bit cascading order of the multiple UCIs based on a priority order preferentially;
   or,
determining the bit cascading order of the multiple UCIs based on UCI types preferentially, where a bit cascading order of multiple UCIs with a same UCI type is determined based on a priority order; and
a transmitting unit 502, configured to transmit, on the first uplink channel, the multiple UCIs cascaded based on the bit cascading order.

As an optional embodiment, in a case that the first rule includes determining the bit cascading order of the multiple UCIs based on the priority order preferentially, the first rule further includes: a bit cascading order of multiple UCIs with a same priority is determined based on UCI types.

As an optional embodiment, priorities of the multiple UCIs include: a high priority and a low priority;
where determining the bit cascading order of the multiple UCIs based on the priority order includes:
determining the bit cascading order of the multiple UCIs based on the priority order as follows: bits of UCI with low priority are cascaded after bits of UCI with high priority, or, bits of UCI with high priority are cascaded after bits of UCI with low priority.

As an optional embodiment, the device further includes:
a third determining unit, configured to determine, based a second rule, a bit mapping order of the multiple UCIs; where the second rule includes:
mapping a more significant bit of UCI before mapping a less significant bit of the UCI;
   or,
mapping a less significant bit of UCI before mapping a more significant bit of the UCI.

As an optional embodiment, the first uplink channel includes at least one of the following:
a physical uplink control channel (PUCCH); or,
a physical uplink shared channel (PUSCH).

In a case that the terminal according to the embodiments of the present disclosure transmits the multiple UCIs with different priorities on the first uplink channel through joint encoding, the terminal determines the bit cascading order of the multiple UCIs based on the priority order preferentially, or, the terminal determines the bit cascading order of the multiple UCIs based on the UCI types preferentially and a bit cascading order of multiple UCIs with a same UCI type is determined based on a priority order. In this way, it is ensured that the uplink channel is multiplexed to transmit the multiple UCIs with different priorities.

It should be noted that, the principles of solving problem used for the device for determining cascading and for the method for determining cascading according to the embodiments of the present disclosure are similar, hence, for implementations of the device for determining cascading, reference can be made to the implementations of the method, the repetition of which is not provided again herein.

As shown in FIG. 6, embodiments of the present disclosure also provide a network side device, including a memory 620, a transceiver 610, and a processor 600;
where the memory 620 is configured to store a computer program, the transceiver 610 is configured to transmit and receive data under control of the processor 600, and the processor 600 is configured to read the computer program in the memory 620 and perform following operations:
receiving, on a first uplink channel, multiple uplink control information (UCIs) with different priorities that are jointly encoded; and
determining, based on a first rule, a bit cascading order of the multiple UCIs with different priorities; where the first rule includes:
   determining the bit cascading order of the multiple UCIs based on a priority order preferentially;
      or,
   determining the bit cascading order of the multiple UCIs based on UCI types preferentially, where a bit cascading order of multiple UCIs with a same UCI type is determined based on a priority order.

As an optional embodiment, in a case that the first rule includes determining the bit cascading order of the multiple UCIs based on the priority order preferentially, the first rule further includes: a bit cascading order of multiple UCIs with a same priority is determined based on UCI types.

As an optional embodiment, priorities of the multiple UCIs include: a high priority and a low priority;
where determining the bit cascading order of the multiple UCIs based on the priority order includes:
determining the bit cascading order of the multiple UCIs based on the priority order as follows: bits of UCI with low priority are cascaded after bits of UCI with high priority, or, bits of UCI with high priority are cascaded after bits of UCI with low priority.

As an optional embodiment, the processor is further configured to read the computer program in the memory and perform following operation:
determining, based a second rule, a bit mapping order of the multiple UCIs; where the second rule includes:
mapping a more significant bit of UCI before mapping a less significant bit of the UCI;
   or,
mapping a less significant bit of UCI before mapping a more significant bit of the UCI.

As an optional embodiment, the first uplink channel includes at least one of the following:
a physical uplink control channel (PUCCH); or,
a physical uplink shared channel (PUSCH).

In FIG. 6, a bus architecture may include any quantity of interconnected buses and bridges. Various circuits including one or more processors represented by the processor 600 and a memory represented by the memory 620 are linked. The bus architecture may further link various other circuits together, such as a periphery component, a voltage stabilizer and a power management circuit, which are known in the art and are not further described herein. A bus interface provides an interface. The transceiver 610 may be multiple elements, i.e., including a transmitter and a receiver, providing a unit for communicating with various other devices on transmission media. The transmission media include a wireless channel, a wired channel, an optical cable, or other transmission media. The processor 600 is in charge of managing the bus architecture and common processes. The memory 620 may store data used by the processor 600 in performing operations.

The processor 600 may be a central processing device (CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor may adopt a multi-core architecture.

In the embodiments of the present disclosure, in a case that the network side device receives on the first uplink channel the multiple UCIs with different priorities that are jointly encoded, the network side device determines the bit cascading order of the multiple UCIs based on the priority order preferentially, or, the network side device determines the bit cascading order of the multiple UCIs based on the UCI types preferentially and a bit cascading order of multiple UCIs with a same UCI type is determined based on a priority order. In this way, it is ensured that the uplink channel is multiplexed to transmit the multiple UCIs with different priorities.

It should be noted that, the principles of solving problem used for the network side device and for the method for determining cascading according to the embodiments of the present disclosure are similar, hence, for implementations of the network side device, reference can be made to the implementations of the method, the repetition of which is not provided again herein.

As shown in FIG. 7, embodiments of the present disclosure also provide a device for determining cascading of uplink control information (UCI), applied to a network side device, including:
a receiving unit 701, configured to receive, on a first uplink channel, multiple UCIs with different priorities that are jointly encoded; and
a second determining unit 702, configured to determine, based on a first rule, a bit cascading order of the multiple UCIs with different priorities; where the first rule includes:
   determining the bit cascading order of the multiple UCIs based on a priority order preferentially;
      or,
   determining the bit cascading order of the multiple UCIs based on UCI types preferentially, where a bit cascading order of multiple UCIs with a same UCI type is determined based on a priority order.

As an optional embodiment, in a case that the first rule includes determining the bit cascading order of the multiple UCIs based on the priority order preferentially, the first rule further includes: a bit cascading order of multiple UCIs with a same priority is determined based on UCI types.

As an optional embodiment, priorities of the multiple UCIs include: a high priority and a low priority;
where determining the bit cascading order of the multiple UCIs based on the priority order includes:
determining the bit cascading order of the multiple UCIs based on the priority order as follows: bits of UCI with low priority are cascaded after bits of UCI with high priority, or, bits of UCI with high priority are cascaded after bits of UCI with low priority.

As an optional embodiment, the device further includes:
a fourth determining unit, configured to determine, based a second rule, a bit mapping order of the multiple UCIs; where the second rule includes:
mapping a more significant bit of UCI before mapping a less significant bit of the UCI;
   or,
mapping a less significant bit of UCI before mapping a more significant bit of the UCI.

As an optional embodiment, the first uplink channel includes at least one of the following:
a physical uplink control channel (PUCCH); or,
a physical uplink shared channel (PUSCH).

In the embodiments of the present disclosure, in a case that the network side device receives on the first uplink channel the multiple UCIs with different priorities that are jointly encoded, the network side device determines the bit cascading order of the multiple UCIs based on the priority order preferentially, or, the network side device determines the bit cascading order of the multiple UCIs based on the UCI types preferentially and a bit cascading order of multiple UCIs with a same UCI type is determined based on a priority order. In this way, it is ensured that the uplink channel is multiplexed to transmit the multiple UCIs with different priorities.

It should be noted that, the principles of solving problem used for the device for determining cascading and for the method for determining cascading according to the embodiments of the present disclosure are similar, hence, for implementations of the device for determining cascading, reference can be made to the implementations of the method, the repetition of which is not provided again herein.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

Embodiments of the present disclosure also provide a processor readable storage medium, where the processor readable storage medium stores a computer program used to cause a processor to execute the method described above. The processor readable storage medium may be any available medium or data storage device that the processor may access, including but not limited to a magnetic memory (such as a floppy disk, a hard disk, a magnetic tape, a magneto-optical disk (MO), etc.), an optical memory (such as a CD, a DVD, a BD, a HVD, etc.), or a semiconductor memory (such as a ROM, an EPROM, an EEPROM, a non-volatile memory (NAND FLASH), a solid-state drive (SSD), etc.).

A person skilled in the art should understand that the embodiments of the present disclosure may be provided as methods, systems, or computer program products. Therefore, the present disclosure may adopt the form of complete hardware embodiments, complete software embodiments, or embodiments combining software and hardware aspects. Moreover, the present disclosure may adopt the form of a computer program product implemented on one or more computer available storage media (including but not limited to a disk storage, an optical storage, etc.) containing computer available program code.

The present disclosure is described with reference to flowcharts and/or block diagrams of methods, devices (systems), and computer program products according to the embodiments of the present disclosure. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determining module may be a separate processing element, or may be integrated into a certain chip of the above device, or, may be stored in the memory of the above device in the form of program code, and a certain processing element of the above device may call and execute the functions of the determining module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "with" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Apparently, those skilled in the art may make various modifications and variations to the present disclosure, without departing from the spirit and scope of the present disclosure. In this case, if the modifications and variations of the present disclosure fall within the scope of the claims of the present disclosure and their equivalent techniques, the present disclosure is intended to include these modifications and variations.

## Claims

1. A method for determining cascading of uplink control information (UCI), comprising:
determining based on a first rule, by a terminal, a bit cascading order of multiple UCIs with different priorities that are to be jointly encoded on a first uplink channel; wherein the first rule comprises: determining the bit cascading order of the multiple UCIs based on a priority order preferentially; or, determining the bit cascading order of the multiple UCIs based on UCI types preferentially, wherein a bit cascading order of multiple UCIs with a same UCI type is determined based on a priority order; and
transmitting, by the terminal, on the first uplink channel, the multiple UCIs cascaded based on the bit cascading order.

2. The method according to claim 1, wherein in a case that the first rule comprises determining the bit cascading order of the multiple UCIs based on the priority order preferentially, the first rule further comprises: a bit cascading order of multiple UCIs with a same priority is determined based on UCI types.

3. The method according to claim 1 or claim 2, wherein priorities of the multiple UCIs comprise: a high priority and a low priority;
wherein determining the bit cascading order of the multiple UCIs based on the priority order comprises:
determining the bit cascading order of the multiple UCIs based on the priority order as follows: bits of UCI with low priority are cascaded after bits of UCI with high priority, or, bits of UCI with high priority are cascaded after bits of UCI with low priority.

4. The method according to claim 1 or claim 2, further comprising:
determining based a second rule, by the terminal, a bit mapping order of the multiple UCIs;
wherein the second rule comprises:
mapping a more significant bit of UCI before mapping a less significant bit of the UCI; or,
mapping a less significant bit of UCI before mapping a more significant bit of the UCI.

5. The method according to claim 1, wherein the first uplink channel comprises at least one of the following:
a physical uplink control channel (PUCCH); or,
a physical uplink shared channel (PUSCH).

6. A method for determining cascading of uplink control information (UCI), comprising:
receiving on a first uplink channel, by a network side device, multiple UCIs with different priorities that are jointly encoded; and
determining based on a first rule, by the network side device, a bit cascading order of the multiple UCIs with different priorities;
wherein the first rule comprises:
determining the bit cascading order of the multiple UCIs based on a priority order preferentially; or,
determining the bit cascading order of the multiple UCIs based on UCI types preferentially, wherein a bit cascading order of multiple UCIs with a same UCI type is determined based on a priority order.

7. The method according to claim 6, wherein in a case that the first rule comprises determining the bit cascading order of the multiple UCIs based on the priority order preferentially, the first rule further comprises: a bit cascading order of multiple UCIs with a same priority is determined based on UCI types.

8. The method according to claim 6 or claim 7, wherein priorities of the multiple UCIs comprise: a high priority and a low priority;
wherein determining the bit cascading order of the multiple UCIs based on the priority order comprises:
determining the bit cascading order of the multiple UCIs based on the priority order as follows: bits of UCI with low priority are cascaded after bits of UCI with high priority, or, bits of UCI with high priority are cascaded after bits of UCI with low priority.

9. The method according to claim 6 or claim 7, further comprising:
determining based a second rule, by the network side device, a bit mapping order of the multiple UCIs;
wherein the second rule comprises:
mapping a more significant bit of UCI before mapping a less significant bit of the UCI; or,
mapping a less significant bit of UCI before mapping a more significant bit of the UCI.

10. The method according to claim 6, wherein the first uplink channel comprises at least one of the following:
a physical uplink control channel (PUCCH); or,
a physical uplink shared channel (PUSCH).

11. A terminal, comprising a memory, a transceiver, and a processor;
wherein the memory is configured to store a computer program, the transceiver is configured to transmit and receive data under control of the processor, and the processor is configured to read the computer program in the memory and perform following operations:
determining, based on a first rule, a bit cascading order of multiple uplink control information (UCIs) with different priorities that are to be jointly encoded on a first uplink channel; wherein the first rule comprises: determining the bit cascading order of the multiple UCIs based on a priority order preferentially; or, determining the bit cascading order of the multiple UCIs based on UCI types preferentially, wherein a bit cascading order of multiple UCIs with a same UCI type is determined based on a priority order; and
transmitting, on the first uplink channel, the multiple UCIs cascaded based on the bit cascading order.

12. The terminal according to claim 11, wherein in a case that the first rule comprises determining the bit cascading order of the multiple UCIs based on the priority order preferentially, the first rule further comprises: a bit cascading order of multiple UCIs with a same priority is determined based on UCI types.

13. The terminal according to claim 11 or claim 12, wherein priorities of the multiple UCIs comprise: a high priority and a low priority;
wherein determining the bit cascading order of the multiple UCIs based on the priority order comprises:
determining the bit cascading order of the multiple UCIs based on the priority order as follows: bits of UCI with low priority are cascaded after bits of UCI with high priority, or, bits of UCI with high priority are cascaded after bits of UCI with low priority.

14. The terminal according to claim 11 or claim 12, wherein the processor is further configured to read the computer program in the memory and perform following operation:
determining, based a second rule, a bit mapping order of the multiple UCIs;
wherein the second rule comprises:
mapping a more significant bit of UCI before mapping a less significant bit of the UCI; or,
mapping a less significant bit of UCI before mapping a more significant bit of the UCI.

15. The terminal according to claim 11, wherein the first uplink channel comprises at least one of the following:
a physical uplink control channel (PUCCH); or,
a physical uplink shared channel (PUSCH).

16. A device for determining cascading of uplink control information (UCI), applied to a terminal, comprising:
a first determining unit, configured to determine, based on a first rule, a bit cascading order of multiple UCIs with different priorities that are to be jointly encoded on a first uplink channel; wherein the first rule comprises: determining the bit cascading order of the multiple UCIs based on a priority order preferentially; or, determining the bit cascading order of the multiple UCIs based on UCI types preferentially, wherein a bit cascading order of multiple UCIs with a same UCI type is determined based on a priority order; and
a transmitting unit, configured to transmit, on the first uplink channel, the multiple UCIs cascaded based on the bit cascading order.

17. The device according to claim 16, wherein in a case that the first rule comprises determining the bit cascading order of the multiple UCIs based on the priority order preferentially, the first rule further comprises: a bit cascading order of multiple UCIs with a same priority is determined based on UCI types.

18. The device according to claim 16 or claim 17, wherein priorities of the multiple UCIs comprise: a high priority and a low priority;
wherein determining the bit cascading order of the multiple UCIs based on the priority order comprises:
determining the bit cascading order of the multiple UCIs based on the priority order as follows: bits of UCI with low priority are cascaded after bits of UCI with high priority, or, bits of UCI with high priority are cascaded after bits of UCI with low priority.

19. The device according to claim 16 or claim 17, further comprising:
a third determining unit, configured to determine, based a second rule, a bit mapping order of the multiple UCIs;
wherein the second rule comprises:
mapping a more significant bit of UCI before mapping a less significant bit of the UCI; or,
mapping a less significant bit of UCI before mapping a more significant bit of the UCI.

20. The device according to claim 16, wherein the first uplink channel comprises at least one of the following:
a physical uplink control channel (PUCCH); or,
a physical uplink shared channel (PUSCH).

21. A network side device, comprising a memory, a transceiver, and a processor;
wherein the memory is configured to store a computer program, the transceiver is configured to transmit and receive data under control of the processor, and the processor is configured to read the computer program in the memory and perform following operations:
receiving, on a first uplink channel, multiple uplink control information (UCIs) with different priorities that are jointly encoded; and
determining, based on a first rule, a bit cascading order of the multiple UCIs with different priorities;
wherein the first rule comprises:
determining the bit cascading order of the multiple UCIs based on a priority order preferentially; or,
determining the bit cascading order of the multiple UCIs based on UCI types preferentially, wherein a bit cascading order of multiple UCIs with a same UCI type is determined based on a priority order.

22. The network side device according to claim 21, wherein in a case that the first rule comprises determining the bit cascading order of the multiple UCIs based on the priority order preferentially, the first rule further comprises: a bit cascading order of multiple UCIs with a same priority is determined based on UCI types.

23. The network side device according to claim 21 or claim 22, wherein priorities of the multiple UCIs comprise: a high priority and a low priority;
wherein determining the bit cascading order of the multiple UCIs based on the priority order comprises:
determining the bit cascading order of the multiple UCIs based on the priority order as follows: bits of UCI with low priority are cascaded after bits of UCI with high priority, or, bits of UCI with high priority are cascaded after bits of UCI with low priority.

24. The network side device according to claim 21 or claim 22, wherein the processor is further configured to read the computer program in the memory and perform following operation:
determining, based a second rule, a bit mapping order of the multiple UCIs;
wherein the second rule comprises:
mapping a more significant bit of UCI before mapping a less significant bit of the UCI; or,
mapping a less significant bit of UCI before mapping a more significant bit of the UCI.

25. The network side device according to claim 21, wherein the first uplink channel comprises at least one of the following:
a physical uplink control channel (PUCCH); or,
a physical uplink shared channel (PUSCH).

26. A device for determining cascading of uplink control information (UCI), applied to a network side device, comprising:
a receiving unit, configured to receive, on a first uplink channel, multiple UCIs with different priorities that are jointly encoded; and
a second determining unit, configured to determine, based on a first rule, a bit cascading order of the multiple UCIs with different priorities;
wherein the first rule comprises:
determining the bit cascading order of the multiple UCIs based on a priority order preferentially; or,
determining the bit cascading order of the multiple UCIs based on UCI types preferentially, wherein a bit cascading order of multiple UCIs with a same UCI type is determined based on a priority order.

27. The device according to claim 26, wherein in a case that the first rule comprises determining the bit cascading order of the multiple UCIs based on the priority order preferentially, the first rule further comprises: a bit cascading order of multiple UCIs with a same priority is determined based on UCI types.

28. The device according to claim 26 or claim 27, wherein priorities of the multiple UCIs comprise: a high priority and a low priority;
wherein determining the bit cascading order of the multiple UCIs based on the priority order comprises:
determining the bit cascading order of the multiple UCIs based on the priority order as follows: bits of UCI with low priority are cascaded after bits of UCI with high priority, or, bits of UCI with high priority are cascaded after bits of UCI with low priority.

29. The device according to claim 26 or claim 27, further comprising:
a fourth determining unit, configured to determine, based a second rule, a bit mapping order of the multiple UCIs;
wherein the second rule comprises:
mapping a more significant bit of UCI before mapping a less significant bit of the UCI; or,
mapping a less significant bit of UCI before mapping a more significant bit of the UCI.

30. The device according to claim 26, wherein the first uplink channel comprises at least one of the following:
a physical uplink control channel (PUCCH); or,
a physical uplink shared channel (PUSCH).

31. A processor readable storage medium, wherein the processor readable storage medium stores a computer program, and the computer program is used to cause a processor to perform the method according to any one of claims 1 to 5; or, the computer program is used to cause a processor to perform the method according to any one of claims 6 to 10.
